# FASCICULE DE BREVET EUROPEEN

(11) **EP 4 185 617 B1**
(45) Date de publication et mention de la délivrance du brevet: **20.03.2024**
(21) Numéro de dépôt: 21745679.7
(22) Date de dépôt: 14.07.2021
(51) Int. Cl.: C08B 30/12, A23L 29/212, C08L 3/02

(54) **PROCEDE DE FABRICATION DE MELANGES D'AMIDONS THERMIQUEMENT MODIFIES**
VERFAHREN ZUR HERSTELLUNG VON THERMISCH MODIFIZIERTEN STÄRKEBLENDS
METHOD FOR PRODUCING THERMALLY MODIFIED STARCH BLENDS

(30) Priorité: 24.07.2020 FR 2007801
(43) Date de publication de la demande: 31.05.2023
(73) Titulaire: ROQUETTE FRERES, 62136 Lestrem (FR)
(72) Inventeur: BOCK, Solène, 59130 Lambersart (FR); LEGRAND, Jacques, 62131 Verquin (FR)
(74) Mandataire: Plasseraud IP
(86) Numéro de dépôt international: PCT/EP2021/025259
(87) Numéro de publication internationale: WO 2022/017642

(56) Documents cités:
- WO-A1-2019/089656
- WO-A1-2019/122749

## Description

L'invention se rapporte à un procédé de production d'un mélange d'au moins deux amidons thermiquement modifiés, dans lequel les amidons sont des amidons granulaires d'origines botaniques distinctes, ce procédé consistant à mélanger lesdits amidons d'origines botaniques distinctes avant de réaliser le traitement thermique proprement dit.

Plus particulièrement, l'invention est relative à un procédé de production d'un mélange de fécule de pomme de terre et d'amidon de maïs waxy thermiquement modifiés.

De tels mélanges d'au moins deux amidons thermiquement modifiés permettent de renforcer leurs propriétés de viscosité tout en conservant les propriétés texturantes exprimées par les amidons thermiquement modifiés préparés à partir d'un amidon issu d'une seule origine botanique.

De tels amidons thermiquement modifiés trouvent alors une utilisation comme agents épaississants et texturants dans de nombreuses applications alimentaires, principalement dans les soupes et sauces, et dans les produits laitiers.

### Contexte de l'invention

Synthétisé par voie biochimique, source d'hydrates de carbone, l'amidon est l'une des matières organiques les plus répandues du monde végétal, où il constitue la réserve nutritionnelle des organismes.

Depuis toujours, les amidons sont utilisés dans l'industrie alimentaire, non seulement comme ingrédient nutritif mais également pour leurs propriétés technologiques, comme agent épaississant, liant, stabilisant ou gélifiant.

Par exemple, les amidons natifs sont utilisés dans les préparations nécessitant une cuisson. L'amidon de maïs, notamment, est la base des « poudres à flan ».

Comme il est riche en amylose, il rétrograde et donc gélifie fortement. Il permet d'obtenir des flans fermes après cuissons et refroidissement.

Il convient également pour les crèmes pâtissières.

Mais celles-ci ne peuvent pas entrer dans les pâtisseries destinées à être congelées car, à la décongélation, le phénomène de synérèse, qui se traduit par une expulsion d'eau, détruit la texture de la crème.

Ainsi, à l'état natif, l'amidon est d'application limitée en raison de la synérèse, mais également en raison de :
- sa faible résistance aux contraintes de cisaillement et aux traitements thermiques,
- sa rétrogradation élevée,
- sa faible processabilité et
- sa faible solubilité dans des solvants organiques communs.

De ce fait, pour répondre aux besoins technologiques exigeants d'aujourd'hui, les propriétés de l'amidon doivent être optimisées par diverses méthodes dites de « modification ».

Ces principales modifications visent alors à adapter l'amidon aux contraintes technologiques résultant de la cuisson, mais aussi de la congélation/décongélation, de l'appertisation ou de la stérilisation, et à le rendre compatible avec une alimentation moderne (micro-ondes, préparations instantanées, "hautes températures"...).

La modification de l'amidon vise alors à corriger un ou certains des défauts mentionnés ci-avant, améliorer ainsi sa polyvalence et satisfaire la demande des consommateurs.

Les techniques de modification de l'amidon ont été globalement classées en quatre catégories : physiques, chimiques, enzymatiques et génétiques, la finalité étant de produire divers dérivés avec des propriétés physicochimiques optimisées.

Les modifications chimiques et physiques sont celles le plus souvent mises en oeuvre.

Le traitement chimique consiste à introduire des groupes fonctionnels dans l'amidon, ce qui altère remarquablement ses propriétés physico-chimiques. De telles modifications des amidons natifs granulaires altèrent en effet profondément le comportement en gélatinisation, collage et rétrogradation.

Généralement, ces modifications sont réalisées par dérivatisation chimique, comme l'estérification, l'éthérification, la réticulation ou le greffage.

Cependant, les modifications chimiques sont moins recherchées par le consommateur dans les applications alimentaires (également pour des raisons d'environnement), même si certaines modifications sont considérées comme sûres.

Des modifications physiques variées sont de ce fait proposées, par exemple :
- le traitement par la chaleur humide (terme anglosaxon de « Heat Moisture Treatment » ou HMT), consistant à traiter l'amidon à des niveaux d'humidité contrôlée (22-27 %) et à haute température, pendant 16 heures, afin d'altérer la structure et les propriétés physicochimiques de l'amidon ;
- la « recuite » (terme anglosaxon d' « annealing »), consistant à traiter l'amidon en excès d'eau, à des températures en-deçà de la température de gélatinisation, afin d'approcher la température de transition vitreuse ;
- le traitement à ultra haute pression (terme anglosaxon de « High Pressure Processing » ou HPP), par lequel on hydrate les régions amorphes du granule d'amidon, ce qui conduit à une distorsion des parties cristallines du granule et favorise l'accessibilité desdites régions cristallines à l'eau ;
- le traitement au plasma de décharge luminescente, qui génère, à température ambiante, des électrons à haute énergie et d'autres espèces hautement actives. Appliqués à l'amidon, ces espèces actives excitent les groupes chimiques de l'amidon et provoquent une réticulation importante des macromolécules ;
- le traitement de pression osmotique (d'acronyme anglosaxon « OPT »), réalisé en présence de solutions à haute teneur en sels. L'amidon est suspendu dans du sulfate de sodium afin de produire une suspension uniforme.

L'amidon passe du type B au type A après traitement, en acquérant ainsi une température de gélatinisation qui augmente de manière significative ;
- le traitement par « inhibition thermique ». En toute généralité, l'inhibition thermique s'entend de la déshydratation d'un amidon jusqu'à atteindre l'état anhydre ou substantiellement anhydre (i.e. < 1 % d'humidité), puis un traitement thermique à plus de 100°C pendant une période de temps suffisante pour « inhiber » l'amidon, en l'occurrence ici pour lui conférer des propriétés d'amidons réticulés. Il est par ailleurs nécessaire de placer l'amidon dans des conditions de pH au moins neutre à préférentiellement alcalin avant de procéder à l'étape de déshydratation poussée. Une alternative de traitement par « inhibition thermique » a été proposée en phase solvant, qui consiste à chauffer un amidon granulaire non prégélatinisé en milieu alcoolique, en présence d'une base et de sels, à une température de 120° à 200°C, pendant 5 minutes à 2 heures.

Quoi qu'il en soit, le processus d'inhibition thermique conduit alors à obtenir une pâte d'amidon présentant des propriétés de résistance accrue à la rupture de viscosité, et une texture non cohésive.

Le domaine technique auquel se rattache l'invention est celui du traitement par inhibition thermique de l'amidon, sans solvant hydro-alcoolique.

Dans ce domaine technique particulier, on peut citer plus particulièrement le brevet US 6.221.420 qui décrit un amidon thermiquement inhibé, obtenu par déshydratation puis traitement thermique.

Les principales étapes sont :
- la déshydratation de l'amidon à une teneur en eau inférieure à 1% réalisée à une température comprise entre 100 et 125°C, puis
- le traitement thermique de l'amidon sec ainsi obtenu, à environ 140°C, dans un lit fluidisé réactionnel, pendant une durée de l'ordre de 20 heures.

De manière préférentielle, avant l'étape de déshydratation de l'amidon, il est recommandé de procéder à une étape d'alcalinisation de l'amidon, permettant de porter le pH de la suspension d'amidon à une valeur comprise entre 7 et 10, de préférence comprise entre 8 et 10.

A ce stade, avant l'étape de déshydratation proprement dite qui précède l'étape d'inhibition, la teneur en eau de l'amidon (telle qu'exemplifiée) est alors comprise entre 8 et 10 %.

La demande de brevet US 2001/0017133 décrit un procédé similaire, dans lequel l'amidon est également déshydraté en dessous de 125°C avant que le processus d'inhibition ne soit démarré (à une température de plus de 100°C, préférentiellement compris entre 120 et 180°C, plus préférentiellement comprise entre 140 et 160°C) pendant une durée jusqu'à 20 heures, préférentiellement comprise entre 3 heures 30 et 4 heures 30.

Avant l'étape de déshydratation, l'étape d'alcalinisation classique conduit à une suspension d'amidon présentant une valeur de pH comprise entre 7,5 et 11,2, de préférence comprise entre 8 et 9,5%, et une teneur en eau compris entre 2 et 15 %.

Une variante a été proposée dans la demande de brevet WO 2014/042537, variante qui porte sur un chauffage d'un amidon alcalin à des températures comprises entre 140 et 190°C, en veillant à ce que le procédé d'inhibition soit initié et conduit en présence d'eau en quantité suffisante, soit plus de 1% d'eau.

En d'autres termes, ce procédé recommande d'inhiber thermiquement un amidon préalablement alcalinisé sans procéder à une étape de déshydratation.

La préparation d'amidon ou l'amidon sont ainsi amenés à un pH compris entre 9,1 et 11,2, préférentiellement à une valeur de l'ordre de 10, et l'humidité est ajustée entre 2 et 22 %, préférentiellement entre 5 et 10%.

L'inhibition thermique est réalisée ensuite directement sur cette poudre ou cet amidon, à une température comprise entre 140 et 190°C, préférentiellement entre 140 et 180°C, pendant une durée de 30 minutes.

La société Demanderesse a développé, quant à elle, son propre procédé de préparation d'amidons modifiés thermiquement, procédé décrit dans sa demande WO 2019/122749, consistant à :
(i) préparer un lait d'amidon présentant une matière sèche comprise entre 30 et 40 %, de préférence entre 35 et 37 % en poids,
(ii) ajouter un agent alcalin de manière à obtenir une conductivité finale comprise entre 0,7 et 2,5 mS/cm,
(iii) assurer un temps de contact compris entre 0,5 et 5 heures,
(iv) filtrer et sécher le lait d'amidon,
(v) chauffer ledit amidon séché de manière à le porter à une température de plus de 180°C pendant un temps de séjour compris entre 12 et 35 minutes.

L'avantage technologique est indéniable. Il permet non seulement de réduire considérablement le temps de réaction, mais permet en outre de traiter les amidons de toutes sources botaniques. Cependant, même si l'on constate que le pouvoir texturant de ces produits est satisfaisant, on peut noter que les propriétés de viscosité développées par les amidons thermiquement modifiés par cette technologie peuvent être encore améliorés.

Dans l'état de l'art, il est présenté différentes alternatives pour améliorer le taux d'inhibition thermique de l'amidon, afin d'améliorer ses propriétés technologiques.

C'est ainsi que dans le brevet EP 1.102.792 il est proposé de doper l'amidon en présences d'oligosaccharides présentant de 1 à 20 unités de sucres.

Sous certaines conditions de mise en oeuvre, le mélange d'amidon et d'oligosaccharides développe alors une meilleure stabilité au stockage à froid.

Cependant, pour certaines applications alimentaires, il doit être ajouté de lourdes étapes de purification permettant de retirer les oligosaccharides de l'amidon après traitement thermique.

Dans le brevet EP 2.251.358, il est préféré mettre en oeuvre un mélange pulvérulent d'amidon et d'hémicellulose soluble dans l'eau, dans des proportions particulières.

Le traitement thermique consiste quant à lui en un traitement à la chaleur humide à une température de 100 à 200°C.

Il est d'ailleurs préconisé une incorporation de carbonate de sodium (ou de composés alcalins similaires) avec de l'hémicellulose dans de l'amidon de tapioca, de riz gluant ou de maïs cireux.

Cependant, il est surtout recherché un procédé de modification de l'amidon de telle sorte que le gonflement et / ou la désintégration (par exemple, rupture) des granules d'amidon soient efficacement supprimés sans aucun traitement chimique.

Selon ce brevet, l'objectif n'est pas d'améliorer à proprement parler les propriétés technologiques de l'amidon ainsi thermiquement modifiés, mais d'empêcher la gélatinisation de l'amidon pour la fabrication de crème pâtissières.

Il demeure donc un besoin de disposer d'un nouveau procédé de préparation d'amidons thermiquement modifiés qui leur confère des propriétés de viscosité améliorés, tout en conservant ses excellentes propriétés de résistance, voire permettant de développer plus encore de résistance aux cycles de gel/dégel.

Et la société Demanderesse a trouvé que ce besoin pouvait être satisfait en proposant un procédé de traitement thermique d'un mélange d'au moins deux amidons granulaires d'origines botaniques distinctes.

### Description de l'invention

Selon l'invention, le procédé de préparation d'un mélange d'au moins deux amidons modifiés thermiquement, dans lequel les amidons sont des amidons granulaires d'origines botaniques distinctes, comprend les étapes consistant à :
(i) Préparer un lait d'amidon contenant au moins deux amidons d'origines botaniques distinctes, présentant une matière sèche totale comprise entre 30 et 40 %, de préférence entre 35 et 37 % en poids,
(ii) Ajouter un agent alcalin de manière à obtenir une conductivité finale sur la poudre remise en suspension à 20 % de matière sèche entre 0,5 et 5 mS/cm,
(iii) Assurer un temps de contact compris entre 0,5 et 5 heures,
(iv) Filtrer et sécher le lait d'amidon jusqu'à une humidité comprise entre 10,5 à 15 %, de manière à obtenir une poudre d'amidons présentant une conductivité entre 0,5 et 2,5 mS/cm et un pH compris entre 9 et 10,5,
(v) Chauffer ladite poudre d'amidons séchés de manière à la porter à une température de plus de 130°C de préférence entre 130 et 220°C, pendant un temps de séjour compris entre 10 minutes et 6 heures.

En choisissant de réaliser le mélange des amidons d'origines botaniques distinctes avant l'imprégnation alcaline et le traitement thermique proprement dit, la société Demanderesse va à l'encontre des enseignements de l'état de l'art.

Il est en effet connu de réaliser des mélanges d'amidons pour optimiser leurs propriétés fonctionnelles, mais cela est réalisé par le mélange de variétés d'amidons thermiquement modifiés avec des amidons natifs comme décrit dans la demande internationale WO 2020/018061.

Par ailleurs, la modification thermique d'un mélange d'amidons d'origines botaniques différentes permet d'assurer un même niveau de modification des deux (ou plus) composants du mélange.

Cette demande internationale protège en effet une composition amidonnée comprenant
- Une fécule de pomme de terre traitée à l'humidité et à la chaleur (HMT) en une quantité variant entre 60 et 70 pour cent en poids de la composition amidonnée totale et
- Une fécule de tapioca natif en quantité comprise entre 30 et 40 pour cent en poids de la composition de l'amidon.

Ou bien, s'il est procédé à des traitements thermiques de mélange, il l'est surtout préconisé pour des mélanges d'amidons avec des agents liants. Comme par exemple décrit dans la demande de brevet EP 3.345.932, où il est choisi un amidon d'une origine botanique donné, mélangé avec un amidon de la même origine mais traité par voie enzymatique ou chimique.

A la connaissance de la société Demanderesse, il n'a jamais été décrit des procédés de traitement thermique sur un mélange préalable d'au moins deux amidons d'origines botaniques distinctes.

Les amidons à utiliser dans le procédé de l'invention peuvent être de toute origine, par exemple le maïs, le maïs waxy, l'amylomaïs, le blé, le blé waxy, le pois, la féverole, la pomme de terre, la pomme de terre waxy, le tapioca, le tapioca waxy, le riz, le konjac, etc.

De manière préférentielle, on choisira de mélanger une fécule de pomme de terre avec un amidon de maïs, plus particulièrement de l'amidon de maïs waxy (à haute teneur en amylopectine).

Selon un mode de réalisation particulier, le procédé selon l'invention peut concerner la préparation d'un mélange de deux amidons modifiés thermiquement, dans lequel les amidons sont des amidons granulaires d'origine botanique distincte, présents dans le mélange en quantités égales, formant ainsi un mélange 50/50 en masse.

Le procédé conforme à l'invention demande la préparation d'un lait d'amidons d'au moins deux origines botaniques distinctes à une matière sèche totale comprise entre 30 et 40 %, de préférence entre 35 et 37 % en poids. Comme il sera exemplifié ci-après, la matière sèche est fixée à 36,5 % en poids.

L'étape suivante consiste alors à contrôler l'imprégnation alcaline des amidons mélangés.

L'agent alcalin est préférentiellement choisi dans le groupe constitué de l'hydroxyde de sodium, le carbonate de sodium, le pyrophosphate tétrasodique, l'orthophosphate d'ammonium, l'orthophosphate disodique, le phosphate trisodique, le carbonate de calcium, l'hydroxyde de calcium, le carbonate de potassium, et l'hydroxyde de potassium, pris seul ou en combinaison, et plus préférentiellement encore le carbonate de sodium.

L'imprégnation alcaline au carbonate de sodium est réalisée en ajoutant l'agent alcalin par exemple sous forme poudre pour obtenir une conductivité finale sur la poudre remise en suspension à 20 % de matière sèche, comprise entre 0,5 et 5 mS/cm.

Il est assuré ensuite un temps de contact compris entre 0,5 et 5 heures, de préférence entre 0,5 et 1 heure.

On procède ensuite au traitement thermique proprement dit. Comme il sera décrit ci-après, l'exemple de réalisation est effectué en étuve ventilée à 170°C, mais ces conditions sont tout à fait transposables à une mise en oeuvre en dispositif turbosécheur continu ou en lit fluidisé réactionnel.

Dans ces dispositifs industriels, les consignes de conductivité et de pH de la poudre d'amidons mélangés avant traitement thermique sont les suivantes :
- Conductivité : comprise entre 0,5 et 2,5 mS/cm,
- pH : compris entre 9,5 et 10,5.

Dans un premier mode de réalisation du procédé selon l'invention, l'étape suivante de traitement thermique proprement dit peut être réalisée dans des dispositifs de traitement thermique combinant les échanges de chaleur par conduction et par convection, dispositif de type turbosécheur, par exemple au moins un turbosécheur continu de type VOMM, qui permet ainsi, en fonction de la taille dudit VOMM, d'atteindre un temps de réaction très court, de l'ordre de quelques minutes, soit moins de 5 minutes par étage de traitement thermique.

Les consignes de température sont ensuite fixées à des valeurs de plus 190°C, de préférence comprise entre 200 et 210°C, pendant un temps de séjour compris entre 10 et 60 minutes, plus préférentiellement encore entre 15 et 35 minutes.

Le delta T, défini comme la différence de température entre la température de consigne et la température du produit en sortie du réacteur, est compris entre 17 et 27°C.

Dans un second mode de réalisation du procédé selon l'invention, le traitement thermique proprement dit peut-être réalisé dans des dispositifs de type « lit fluidisé réactionnel ».

Comme il est connu de l'homme du métier, ce dispositif est constitué d'un réacteur qui permet de mettre en suspension un solide divisé grâce à un gaz, en l'occurrence un mélange air/azote. La vitesse du gaz est réglée en fonction de la matière première.

La température de traitement thermique (température du produit) est entre 130 et 200°C avec un temps de réaction variant entre 30 min et 6 h, préférentiellement entre 2 et 4 heures.

Les amidons thermiquement modifiés selon l'invention seront avantageusement utilisés, en fonction de leurs propriétés respectives, en tant qu'agent épaississant ou agent texturant dans des applications alimentaires, notamment dans les soupes, sauces et dans les produits laitiers.

Une des limitations principales des amidons thermiquement modifiés fabriqués à partir d'une seule source botanique, est une viscosité développée légèrement plus faible que celle des amidons chimiquement modifiés du marché, nécessitant un surdosage en cas de remplacement dans le cadre d'une solution respectant le 100% naturel et « avec le moins de transformation chimique possible ». (en anglais « clean label »).

Ces mélanges s'inscrivent donc comme une solution simple et performante pour les industries fabriquant par exemple des sauces.

Plus particulièrement ces mélanges seraient adaptés aux exigences technologiques de pasteurisation, cisaillement moyen et pH acides.

L'invention sera mieux comprise à l'aide des exemples qui suivent, lesquels se veulent illustratifs et non limitatifs.

### Exemples

### Matériel et méthodes

### Mesure de la conductivité

La méthode mise en oeuvre ici est adaptée de la Pharmacopée Européenne - édition officielle en vigueur - Conductivité (§ 2.2.38).

### Matériels :

Conductivimètre électronique KNICK 703 équipé également de sa cellule de mesure et vérifié selon le mode opératoire décrit dans le manuel d'instructions qui s'y rapporte.

### Mode opératoire :

On prépare une solution contenant 20 g d'échantillon et 80 g d'eau distillée présentant une résistivité supérieure à 500 000 ohms.cm.

On effectue la mesure, à 20°C, à l'aide du conductivimètre en se reportant au mode opératoire indiqué dans le manuel d'utilisation de l'appareil.

Les valeurs sont exprimées en milliSiemens/cm (mS/cm).

### Mesure de la viscosité d'une suspension d'amidon à l'aide du Rapid Viscosimeter Analyser (RVA)

Cette mesure est réalisée dans des conditions de concentration déterminées et suivant un profil d'analyse température/temps adapté.

Deux solutions tampons sont préparées :
*Tampon A*
   Dans un bécher de 1 litre, contenant 500 ml d'eau déminéralisée, on ajoute
   - 91,0 g d'acide citrique monohydrate (pureté > 99,5 %) et homogénéise,
   - 33,0 g de chlorure de sodium (pureté > 99,5 %), et homogénéise jusqu'à dissolution complète,
   - 300,0 g de soude 1N.
   On transvase dans une fiole jaugée de 1 L et complète avec de l'eau déminéralisé à 1 L.
*Tampon B*
   On mélange 100 g de Tampon A avec 334 ,0 g d'eau déminéralisée.
   On prépare le produit à analyser de la manière suivante :
      Une masse de 1,37 g du produit sec à analyser ainsi obtenu est introduite directement dans le bol du viscosimètre, et on introduit de la solution Tampon B jusqu'à l'obtention d'une masse égale à 28,00 ± 0,01 g. On homogénéise à la pale d'agitation du Rapid Visco Analyser (RVA-NewPort Scientific).
   Le profil d'analyse temps / température et vitesse dans le RVA est alors réalisé comme suit :

**[Tableau 1]**

| Temps hh:mm:ss | Température °C | Vitesse de rotation Tour/min (RPM) |
|---|---|---|
| 00:00:00 | 50 | 100 |
| 00:00:10 | 50 | 500 |
| 00:00:20 | 50 | 960 |
| 00:00:30 | 50 | 160 |
| 00:01:00 | 50 | 160 |
| 00:05:00 | 92 | 160 |
| 00:17:00 | 92 | 160 |
| 00:20:00 | 50 | 160 |

Fin de test : 00:20:05 (hh:mm:ss)
Température initiale : 50°C ± 0,5°C
Intervalle d'acquisition des données : 2 secondes
Sensibilité : basse (low)

Les résultats des mesures sont donnés en RVU (unité utilisée pour exprimer la viscosité obtenue sur le RVA), sachant que 1 unité RVU = 12 cPoises (cP).

Pour rappel, 1 cP = 1 mPa.s.

Les résultats seront donc présentés en mPa.s.

Les mesures de viscosité seront réalisées « au pic », i.e. valeur de viscosité maximale entre 4 et 6 minutes, et « à la chute », i.e. la différence entre la valeur de la viscosité au pic et celle mesurée à 17 minutes.

### Exemple 1 : Obtention du mélange d'amidons modifiés thermiquement en étuve ventilée

Ces premiers essais sont réalisés à l'échelle du laboratoire, en étuve, de manière à choisir les meilleures proportions en fécule de pomme de terre et en amidon de maïs waxy dans le mélange, avant de procéder aux essais industriels.

*Préparation du mélange d'amidons et imprégnation au carbonate de sodium.*

Les amidons natifs (amidon de maïs waxy et fécule de pomme de terre) sont des produits commercialisés par la société Demanderesse sous ces mêmes noms.

On introduit de l'amidon de maïs waxy et de la fécule de pomme de terre en poudre dans les proportions indiquées dans le tableau 2 ci-après.

On met ensuite ce mélange de poudre en suspension dans de l'eau déminéralisée de manière à obtenir une matière sèche totale de 36,5% en poids.

On prend ensuite la mesure du pH et de la conductivité de la suspension.

On ajoute dans ce lait du carbonate de sodium dans les conditions alternatives suivantes :
- Si ajout de carbonate de sodium sous forme poudre : en quantité suffisante pour obtenir une conductivité finale mesurée sur une poudre remise en suspension à 20% de MS entre 0,5 et 1 mS/cm. On laisse un temps de contact de 2 heures,
- Si ajout de carbonate de sodium en solution à 30 % de concentration massique : en quantité suffisante pour obtenir une conductivité, sur le lait, comprise entre 2 et 4 mS/cm. Un temps de contact de 30 minutes suffit, étant donné que le carbonate de sodium est déjà bien dissout en solution à 30 %.

On filtre et sèche à une humidité d'équilibre de l'amidon entre 10 et 14 %.

**[Tableau 2]**

| Essais | % en poids d'amidon de maïs waxy | % en poids de fécule de pomme de terre |
|---|---|---|
| E-1* | 100 | 0 |
| E-2 | 94 | 6 |
| E-3 | 90 | 10 |
| E-4 | 70 | 30 |
| E-5 | 50 | 50 |
| E-6* | 0 | 100 |

| | | |
|---|---|---|
| (*) : Les essais E-1 et E-6 sont les témoins Amidons d'une seule source botanique. | | |

### Traitement thermique à l'étuve

Matériel utilisé :
- Etuve ventilée MEMMERT.
- Coupelle en aluminium pour METTLER LJ16 (Balance mesure d'humidité).
- Balance.

Mode opératoire :
- Peser ~ 40 g par coupelle en aluminium de la base Amidons à tester.
- Mettre les coupelles dans l'étuve MEMMERT préalablement réglée à 170°C.
- Déclencher le chronomètre dès la fin d'introduction des coupelles dans l'étuve.
- Puis sortir de l'étuve une coupelle à chaque point de la cinétique de réaction.

### Neutralisation et lavage des produits obtenus

Après la réaction à 170°C, on remet en suspension l'essai à 36% de MS en eau déminéralisée.

On rectifie le pH entre 5,5 et 6 par HCl.

On filtre et lave par percolation de sorte à obtenir sur le produit final remis en suspension à 20% de MS une conductivité < 500 mS/cm.

On sèche le « gâteau » obtenu sous une hotte ventilée une nuit à température ambiante.

On broie grossièrement sur broyeur IKA A11 basic puis tamise sur une grille de 315 µm.

### Exemple 2 : Analyses des propriétés des mélanges d'amidons modifiés thermiquement

Les mesures de viscosité RVA à 92°C sont réalisées et sont présentées dans le tableau 3 ci-dessous.

**[Tableau 3]**

| Essais | Temps de réaction (h) | RVA Pic (mPa.s) | RVA Chute (mPa.s) |
|---|---|---|---|
| **E-1** | **1** | **328,7** | **-184** |
| | **2** | **48** | **-126** |
| E-2 | 1 | 206,3 | -265 |
| | 1,5 | 110,2 | -220 |
| E-3 | 1 | 530,7 | -91 |
| | 1,5 | 319,2 | -246 |
| | 2 | 148,0 | -244 |
| E-4 | 0,5 | 854,7 | 452 |
| | 1 | 649,2 | -30 |
| | 1,5 | 434,4 | -358 |
| | 2 | 209,8 | -436 |
| | 2,5 | 104,0 | -333 |
| E-5 | 0,5 | 755,8 | 328 |
| | 1 | 848,7 | 131 |
| | 1,5 | 549,9 | -292 |
| | 2 | 342,1 | -441 |
| **E-6** | **2** | **659,5** | **-338** |

Chaque amidon thermiquement modifié selon l'invention présente une stabilité améliorée durant le process d'utilisation par rapport à l'amidon natif : moins de phénomène de prise en viscosité et de rétrogradation sont observés lors de l'utilisation de ces amidons. Sur ce point, on constate en effet que plus la chute RVA tend vers 0 ou devient négative, plus le produit sera fonctionnalisé donc, plus il sera résistant et moins il exprimera de rétrogradation.

On réalise une comparaison avec un amidon modifié chimique (CLEARAM^{®} CH2020) et des amidons inhibés thermiquement base waxy (NOVATION^{®} 2600, NOVATION^{®} 2300 et CLARIA^{®} PLUS) présents sur le marché. Les résultats sont présentés dans le tableau 4.

**[Tableau 4]**

| Produit | RVA Pic (mPa.s) | RVA Chute (mPa.s) |
|---|---|---|
| CLEARAM^{®} CH2020 | 760 | 6 |
| NOVATION^{®} 2600 | 603 | 30 |
| NOVATION^{®} 2300 | 276 | -186 |
| CLARIA^{®} PLUS | 399 | -132 |

Les produits présentés dans ce tableau sont produits à partir d'une seule source botanique, en l'occurrence l'amidon de maïs waxy.

Les amidons inhibés thermiquement tels que le NOVATION^{®} 2600, NOVATION^{®} 2300 et CLARIA^{®} PLUS, ainsi que les amidons modifiés thermiquement E-1 et E-6 ont en commun le fait qu'ils présentent tous une viscosité au pic inférieure au CLEARAM^{®} CH2020 qui est un amidon modifié chimiquement.

En réalisant un mélange fécule de pomme de terre et amidon de maïs waxy, les viscosités au pic sont plus élevées que celles des amidons modifiés obtenus à partir d'une seule source botanique.

Le mélange 50/50 donne le meilleur compromis entre sa viscosité au pic qui représente la viscosité développée par le produit et sa viscosité à la chute qui représente son niveau de résistance.

Le mélange 50/50 permet de bénéficier des avantages des deux matières premières en termes de texture, résistance et développement de viscosité.

### Exemple 3 : préparation d'un mélange d'amidon thermiquement modifié A en turbosécheur continu VOMM.

1) L'alcalinisation du mélange d'amidon est conduite selon les étapes suivantes :
   - Préparer une suspension 50/50 en %poids d'amidon de maïs waxy et de fécule de pomme de terre à 36.5% de matière sèche (MS) ;
   - Ajouter du carbonate de sodium en poudre pour obtenir une conductivité finale sur la poudre remise en suspension à 20% MS entre 0.5 et 1mS/cm;
   - Assurer un temps de contact de 2h;
   - Filtrer et sécher à une humidité d'équilibre de l'amidon entre 10-14%

Il est tout à fait possible, au lieu d'ajouter du carbonate de sodium en poudre, de :
- Préparer une solution aqueuse de carbonate de sodium à 30% de concentration massique et chauffer vers 40-50°C pour favoriser la dissolution du carbonate ;
- Ajouter la solution de carbonate de sodium à 30% de concentration massique de manière à obtenir une conductivité sur le lait comprise entre 2 et 4 mS/cm;
- Assurer un temps de contact de 30min.

Cela permet de diminuer le temps de contact puisque le carbonate est déjà bien dissout en solution à 30%.

### 2) Traitement thermique

Le produit ainsi obtenu est traité thermiquement dans des turbosécheurs continus de type VOMM en série, dont la température de consigne est fixée à 210°C et configurés pour faire subir au produit un temps de séjour de 30 min, et de manière à ce que la différence de température entre la consigne et la température du produit en sortie du réacteur, qu'on appelle Delta T, soit d'une valeur de l'ordre de 21 °C.

### Paramètres de process

**[Tableau 5]**

| Exp | Conductivité sur produit après imprégnation remis à 20%MS en mS/cm | Humidité du produit avant traitement thermique | Delta T | T°C consigne | Temps de séjour min |
|---|---|---|---|---|---|
| A-1 | 0.626 | 10 | 21 | 210 | 30 |

Les mesures de viscosité RVA sont réalisées et sont présentées dans le tableau ci-dessous.

### Résultats

**[Tableau 6]**

| Exp | RVA Chute (mPa.s) | RVA Pic (mPa.s) |
|---|---|---|
| Base 50/50 maïs waxy / fécule de pomme de terre | 990 | 1169 |
| A-1 | -158 | 577 |

Le mélange 50/50 donne ici également le meilleur compromis entre sa viscosité au pic qui représente la viscosité développée par le produit et sa viscosité à la chute qui représente son niveau de résistance.

### Exemple 4 : préparation d'un mélange d'amidon thermiquement modifié B en turbosécheur continu VOMM.

1) L'alcalinisation du mélange d'amidon est conduite selon les étapes suivantes :
   - Préparer une suspension 50/50 en %poids d'amidon de maïs waxy et de fécule de pomme de terre à 36.5% de matière sèche (MS) ;
   - Ajouter du carbonate de sodium en poudre pour obtenir une conductivité finale sur la poudre remise en suspension à 20% MS entre 0.5 et 1mS/cm;
   - Assurer un temps de contact de 2h;
   - Filtrer et sécher à une humidité d'équilibre de l'amidon entre 10-14%.

Il est tout à fait possible au lieu d'ajouter du carbonate de sodium en poudre de :
- Préparer une solution de carbonate de sodium à 30% de concentration massique et chauffer vers 40-50°C pour favoriser la dissolution du carbonate ;
- Ajouter la solution de carbonate de sodium à 30% de concentration massique de manière à obtenir une conductivité sur le lait comprise entre 2 et 4 mS/cm;
- Assurer un temps de contact de 30min.

Cela permet de diminuer le temps de contact puisque le carbonate est déjà bien dissout en solution à 30%.

### 2) Traitement thermique

Le produit ainsi obtenu est traité thermiquement dans des turbosécheurs continus de type VOMM en série, dont la température de consigne est fixée à 210°C et configurés pour faire subir au produit un temps de séjour de 35 à 40 min, et de manière à ce que la différence de température entre la consigne et la température du produit en sortie du réacteur, qu'on appelle Delta T, soit d'une valeur de l'ordre de 24 à 25 °C.

### Paramètres de process

**[Tableau 7]**

| Exp | Conductivité sur produit après imprégnation remis à 20%MS en mS/cm | Humidité du produit avant traitement thermique | Delta T | T°C consigne | Temps de séjour min |
|---|---|---|---|---|---|
| B-1 | 0.630 | 10 | 24 | 210 | 35 |
| B-2 | 0.595 | 10.1 | 25 | 210 | 40 |

Les mesures de viscosité RVA sont réalisées et sont présentées dans le tableau ci-dessous.

### Résultats

**[Tableau 8]**

| Exp | RVA Chute (mPa.s) | RVA Pic (mPa.s) |
|---|---|---|
| Base 50/50 maïs waxy / fécule de pomme de terre | 990 | 1169 |
| B-1 | -386 | 648 |
| B-2 | -497 | 469 |

Le mélange 50/50 donne ici également le meilleur compromis entre sa viscosité au pic qui représente la viscosité développée par le produit et sa viscosité à la chute qui représente son niveau de résistance.

### Exemple 5 : préparation d'un mélange d'amidon thermiquement modifiés C en turbosécheur continu VOMM.

1) L'alcalinisation du mélange d'amidon est conduite selon les étapes suivantes :
   - Préparer une suspension 50/50 en %poids d'amidon de maïs waxy et de fécule de pomme de terre à 36.5% de matière sèche (MS) ;
   - Ajouter du carbonate de sodium en poudre pour obtenir une conductivité finale sur la poudre remise en suspension à 20% MS entre 0.5 et 1mS/cm;
   - Assurer un temps de contact de 2h;
   - Filtrer et sécher à une humidité d'équilibre de l'amidon entre 10-14%.

Il est tout à fait possible au lieu d'ajouter du carbonate de sodium en poudre de :
- Préparer une solution de carbonate de sodium à 30% de concentration massique et chauffer vers 40-50°C pour favoriser la dissolution du carbonate ;
- Ajouter la solution de carbonate de sodium à 30% de concentration massique de manière à obtenir une conductivité sur le lait comprise entre 2 et 4 mS/cm;
- Assurer un temps de contact de 30min.

Cela permet de diminuer le temps de contact puisque le carbonate est déjà bien dissout en solution à 30%

### 2) Traitement thermique

Le produit ainsi obtenu est traité thermiquement dans des turbosécheurs continus de type VOMM en série, dont la température de consigne est fixée à 210°C et configurés pour faire subir au produit un temps de séjour de 45 à 50 min, et de manière à ce que la différence de température entre la consigne et la température du produit en sortie du réacteur, qu'on appelle Delta T, soit d'une valeur de l'ordre de 22 à 25 °C.

### Paramètres de process

**[Tableau 9]**

| Exp | Conductivité sur produit après imprégnation remis à 20%MS en mS/cm | Humidité du produit avant traitement thermique | Delta T | T°C consigne | Temps de séjour min |
|---|---|---|---|---|---|
| C-1 | 0.605 | 10.3 | 25 | 210 | 45 |
| C-2 | 0.590 | 11 | 22 | 210 | 50 |

Les mesures de viscosité RVA sont réalisées et sont présentées dans le tableau ci-dessous.

### Résultats

**[Tableau 10]**

| Exp | RVA Chute (mPa.s) | RVA Pic (mPa.s) |
|---|---|---|
| Base 50/50 maïs waxy / fécule de pomme de terre | 990 | 1169 |
| C-1 | -504 | 345 |
| C-2 | -457 | 181 |

Les mélanges d'amidons thermiquement modifiés C représentent les produits les plus résistants aux cisaillements, à l'acidité des milieux et aux traitements thermiques.

Les mélanges d'amidons thermiquement modifiés B sont un peu moins résistants que les mélanges d'amidons thermiquement modifiés C et les mélanges d'amidons thermiquement modifiés A le sont un peu moins que les mélanges d'amidons thermiquement modifiés B.

Si l'on compare les temps de réaction entre le procédé à l'étuve et le procédé en turbosécheurs de type VOMM, il faut environ 35 min de temps de réaction dans des turbosécheurs de type VOMM en série pour obtenir un produit proche des fonctionnalités du produit E-5 à 1,5 h de temps de réaction.

De même, il faut entre 40 et 45 min de temps de réaction dans des turbosécheurs de type VOMM en série pour obtenir un produit proche des fonctionnalités du produit E-5 à 2 h de temps de réaction.

Le choix d'utilisation de ces mélanges d'amidons se fera en fonction de l'application visée et donc des conditions de cisaillement, d'acidité et de température de mise en oeuvre.

## Revendications

1. Procédé de préparation d'un mélange d'au moins deux amidons modifiés thermiquement, dans lequel les amidons sont des amidons granulaires d'origine botanique distincte, qui comprend les étapes consistant à :
(i) Préparer un lait d'amidon contenant au moins deux amidons d'origines botaniques distinctes, présentant une matière sèche totale comprise entre 30 et 40 %, de préférence entre 35 et 37 % en poids,
(ii) Ajouter un agent alcalin de manière à obtenir une conductivité finale sur la poudre remise à 20 % de matière sèche entre 0.5 et 5 mS/cm,
(iii) Assurer un temps de contact compris entre 0,5 et 5 heures,
(iv) Filtrer et sécher le lait d'amidon jusqu'à une humidité comprise entre 10,5 à 15 %, de manière à obtenir une poudre d'amidons présentant une conductivité entre 0,5 et 2,5 mS/cm et un pH compris entre 9 et 10,5,
(v) Chauffer ladite poudre d'amidons séchés de manière à la porter à une température de plus de 130°C, de préférence entre 130 et 220°C,pendant un temps de séjour compris entre 10 minutes et 6 heures.

2. Procédé selon la revendication 1, **caractérisé en ce que** l'origine botanique des amidons est choisie dans le groupe constitué par le maïs, le maïs waxy, l'amylomaïs, le blé, le blé waxy, le pois, la féverole, la pomme de terre, la pomme de terre waxy, le tapioca, le tapioca waxy, le riz, le konjac et est plus préférentiellement de la fécule de pomme de terre et de l'amidon de maïs waxy.

3. Procédé selon la revendication 1, **caractérisé en ce que** l'agent alcalin est choisi dans le groupe constitué de l'hydroxyde de sodium, le carbonate de sodium, le pyrophosphate tétrasodique, l'orthophosphate d'ammonium, l'orthophosphate disodique, le phosphate trisodique, le carbonate de calcium, l'hydroxyde de calcium, le carbonate de potassium, et l'hydroxyde de potassium, pris seul ou en combinaison, et plus préférentiellement encore le carbonate de sodium.

4. Procédé selon la revendication 3, **caractérisé en ce que** la montée en température de l'amidon sec obtenu à l'étape (v) est réalisée dans des dispositifs de type turbosécheurs continus, pour lesquels la température de consigne est fixée à plus de 190°C, de préférence comprise entre 200 et 210°C, pendant un temps de séjour compris entre 10 et 60 minutes, plus préférentiellement encore entre 15 et 35 minutes et le delta T, défini comme la différence de température entre la température de consigne et la température du produit en sortie du réacteur, est compris entre 17 et 27°C.

5. Procédé selon la revendication 3, **caractérisé en ce que** la montée en température de l'amidon sec obtenu à l'étape (v) est réalisée dans des dispositifs de type lit fluidisé réactionnel, pour lesquels la température de consigne est fixée à plus de 130°C, de préférence comprise entre 130 et 200°C, pendant un temps de séjour compris entre 30 minutes et 6 heures, plus préférentiellement encore entre 2 heures et 4 heures.

6. Utilisation d'un amidon modifié thermiquement produit par le procédé selon l'une quelconque des revendications précédentes, en tant qu'agent épaississant ou agent texturant dans des applications alimentaires, en particulier dans les soupes et sauces, et dans les produits laitiers.

## Patentansprüche

1. Verfahren zur Herstellung einer Mischung aus wenigstens zwei thermisch modifizierten Stärken, wobei die Stärken körnige Stärken unterschiedlicher botanischer Herkunft sind, welches Verfahren die folgenden Schritte umfasst:
i. Herstellen einer Stärkemilch, die wenigstens zwei Stärken unterschiedlicher botanischer Herkunft umfasst und eine Gesamttrockenmasse zwischen 30 und 40 Gew.-%, bevorzugt zwischen 35 und 37 Gew.-%, aufweist,
ii. Zugeben eines alkalischen Mittels, so dass eine endgültige Leitfähigkeit für das auf 20 % Trockenmasse gebrachte Pulver zwischen 0,5 und 5 mS/cm erreicht wird,
iii. Gewährleisten einer Kontaktzeit zwischen 0,5 und 5 Stunden,
iv. Filtrieren und Trocknen der Stärkemilch bis zu einer Feuchtigkeit zwischen 0,5 und 15 %, um ein Stärkepulver mit einer Leitfähigkeit zwischen 0,5 und 2,5 mS/cm und einem pH-Wert zwischen 9 und 10,5 zu erhalten,
v. Erhitzen des getrockneten Stärkepulvers, so dass es für eine Verweilzeit zwischen 10 Minuten und 6 Stunden auf eine Temperatur von mehr als 130 C, bevorzugt zwischen 130 und 220 °C, gebracht wird.

2. Verfahren nach Anspruch 1, **dadurch gekennzeichnet, dass** der botanische Ursprung der Stärken aus der Gruppe gewählt wird, umfassend Mais, Waxy-Mais, Amylomais, Weizen, Waxy-Weizen, Erbsen, Ackerbohnen, Kartoffeln, Waxy-Kartoffeln, Tapioka, Waxy-Tapioka, Reis, Konjak, und stärker bevorzugt Kartoffelstärke und Waxy-Maisstärke.

3. Verfahren nach Anspruch 1, **dadurch gekennzeichnet, dass** das alkalische Mittel gewählt ist aus der Gruppe, umfassend Natriumhydroxid, Natriumcarbonat, Tetranatriumpyrophosphat, Ammoniumorthophosphat, Dinatriumorthophosphat, Trinatriumphosphat, Calciumcarbonat, Calciumhydroxid, Kaliumcarbonat und Kaliumhydroxid, jeweils allein oder in Kombination, und stärker bevorzugt Natriumcarbonat.

4. Verfahren nach Anspruch 3, **dadurch gekennzeichnet, dass** der Temperaturanstieg der in Schritt (v) erhaltenen trockenen Stärke in kontinuierlichen Vorrichtungen vom Typ Turbotrockner durchgeführt wird, bei denen die Solltemperatur auf über 190 °C, bevorzugt zwischen 200 und 210 °C, während einer Verweilzeit von 10 bis 60 Minuten, stärker bevorzugt von 15 bis 35 Minuten, festgelegt wird und das Delta T, definiert als die Temperaturdifferenz zwischen der Solltemperatur und der Temperatur des Produkts am Ausgang des Reaktors, zwischen 17 und 27 °C liegt.

5. Verfahren nach Anspruch 3, **dadurch gekennzeichnet, dass** der Temperaturanstieg der in Schritt (v) erhaltenen trockenen Stärke in Vorrichtungen vom Typ Reaktionswirbelbett durchgeführt wird, für die die Solltemperatur auf über 130 °C, bevorzugt zwischen 130 und 200 °C, festgelegt wird, während einer Verweilzeit von 30 Minuten bis 6 Stunden, stärker bevorzugter von 2 Stunden bis 4 Stunden.

6. Verwendung einer thermisch modifizierten Stärke, die durch das Verfahren nach einem der vorhergehenden Ansprüche hergestellt wurde, als Verdickungsmittel oder Texturierungsmittel in Lebensmittelanwendungen, insbesondere in Suppen und Saucen und in Milchprodukten.

## Claims

1. A method of preparing a blend of at least two thermally modified starches, in which the starches are granular starches of different botanical origins, which comprises the steps consisting in:
(i) preparing a starch milk containing at least two starches of different botanical origins, having total solids content of between 30 and 40%, and preferably between 35 and 37% by weight,
(ii) adding an alkaline agent so as to obtain a final conductivity of the powder resuspended to 20% solids content of between 0.5 and 5 mS/cm,
(iii) ensuring a contact time of between 0.5 and 5 hours,
(iv) filtering and drying the starch milk to a moisture content of between 10.5 and 15%, so as to obtain a starch powder having a conductivity of between 0.5 and 2.5 mS/cm and a pH of between 9 and 10.5,
(v) heating the dried starch powder so as to bring it to a temperature higher than 130°C, preferably between 130 and 220°C, for a residence time of between 10 minutes and 6 hours.

2. The method according to claim 1, **characterized in that** the botanical origin of the starches is selected from the group consisting of corn, waxy corn, amylomaize, wheat, waxy wheat, pea, faba bean, potato, waxy potato, tapioca, waxy tapioca, rice, konjac and is more preferentially potato starch and waxy corn starch.

3. The method according to claim 1, **characterized in that** the alkaline agent is selected from the group consisting of sodium hydroxide, sodium carbonate, tetrasodium pyrophosphate, ammonium orthophosphate, disodium orthophosphate, trisodium phosphate, calcium carbonate, calcium hydroxide, potassium carbonate, and potassium hydroxide, taken alone or in combination, and even more preferentially sodium carbonate.

4. The method according to claim 3, **characterized in that** the rise in temperature of the dry starch obtained in step (v) is carried out in continuous turbo-dryer type devices, for which the setpoint temperature is set to more than 190°C, preferably between 200 and 210°C, for a residence time of between 10 and 60 minutes, even more preferentially between 15 and 35 minutes and the delta T, defined as the difference in temperature between the setpoint temperature and the temperature of the product at the outlet of the reactor, is of between 17 and 27°C.

5. The method according to claim 3, **characterized in that** the rise in temperature of the dry starch obtained in step (v) is carried out in devices of the reaction fluidized bed type, for which the setpoint temperature is set to more than 130°C, preferably between 130 and 200°C, for a residence time of between 30 minutes and 6 hours, even more preferentially between 2 hours and 4 hours.

6. Use of a thermally modified starch produced by the method according to any one of the preceding claims, as a thickening agent or texturizing agent in food applications, in particular in soups and sauces, and in dairy products.
